# EUROPEAN PATENT APPLICATION

(11) **EP 4 414 118 A1**
(43) Date of publication of application: **14.08.2024**
(21) Application number: 22878374.2
(22) Date of filing: 27.09.2022
(51) Int. Cl.: B23K 26/064, B23K 26/073, G02B 3/00, G02B 3/08, G02B 27/09

(54) **BEAMFORMING DEVICE**

(30) Priority: 04.10.2021 JP 2021163512
(71) Applicant: Amada Co., Ltd., Isehara-shi, Kanagawa 259-1196 (JP)
(72) Inventor: ITO, Ryouhei, Isehara-shi, Kanagawa 259-1196 (JP); ISHIGURO, Hiroaki, Isehara-shi, Kanagawa 259-1196 (JP)
(74) Representative: Grünecker Patent- und Rechtsanwälte PartG mbB
(86) International application number: PCT/JP2022/035965
(87) International publication number: WO 2023/058504

(57) **Abstract**

The beam shaper (25A) includes a mode conversion device (27), a collimating lens (28), and a focusing lens (30). The mode conversion device (27) refracts, among laser beams (LB) of incident divergent light, laser beams incident on an outer peripheral side of a central portion (31c) about an optical axis towards the optical axis (Ax) to emit as outer peripheral side beams (NDB1), and emits the laser beams incident on the central portion (31c) as central beams (NDB2) having an angle of emergence equal to an angle of incidence. A collimating lens (28) converts the outer peripheral side beams (NDB1) and the central beams (NDB2) emitted from the mode conversion device (27) into collimated light. A focusing lens (30) focuses the outer peripheral side beams (NDB1) and the central beams (NDB2) emitted from the collimating lens (28) .

## Description

### [TECHNICAL FIELD]

The present disclosure relates to a beam shaper.

### [BACKGROUND ART]

Patent Literature 1 describes shaping laser beams into a ring shape by an axicon lens, which is a mode conversion device, to process a medium-thick plate workpiece.

### [Citation List]

### [Patent Literature]

[Patent Literature 1] Japanese Unexamined Patent Application Publication No. 2020-116603

### [SUMMARY OF INVENTION]

When laser beams are refracted toward an optical axis by an axicon lens and the refracted laser beams are focused by a focusing lens, laser beams having a ring-shaped beam profile is irradiated onto a workpiece. The beams crossing the optical axis are overlapped in the vicinity of the optical axis of the laser beams irradiated onto the workpiece, and a peak region in which the light intensity is partially high is generated as in the ring-shaped region. When the workpiece is cut by the laser beams, the beams near the optical axis may pass through the kerf of the cut workpiece and travel to the back side of the workpiece with high light intensity.

When the beams near the optical axis with high light intensity travel to the back side of the workpiece, a member located on the back side may be damaged. It is required to suppress the damage of the member located on the back side, even when the beams near the optical axis travel to the back side of the workpiece.

An aspect of one or more embodiments provides a beam shaper including: a mode conversion device configured to refract, among laser beams of incident divergent light, laser beams incident on an outer peripheral side of a central portion about an optical axis towards the optical axis to emit as outer peripheral side beams, and to emit the laser beams incident on the central portion as central beams having an angle of emergence equal to an angle of incidence;a collimating lens configured to convert the outer peripheral side beams and the central beams emitted from the mode conversion device into collimated light; and a focusing lens configured to focus the outer peripheral side beams and the central beams emitted from the collimating lens, wherein an inner peripheral beams located on an innermost peripheral side of the outer peripheral side beams intersect at a position closer to the mode conversion device side relative to the focal point of the inner peripheral beams and an outer peripheral beams located on the outermost peripheral side of the outer peripheral side beams; and a size of the central portion is set such that the focusing lens emits the inner peripheral beams in a direction parallel to or away from the optical axis.

According to an aspect of one or more embodiments, among the laser beams of incident divergent light, the innermost inner peripheral beams of the outer peripheral side beams incident on the outer peripheral side of the central portion and refracted to the optical axis side do not overlap in the vicinity of the optical axis, and a peak region in which the light intensity is partially high does not occur. Thus, even if the beams in the vicinity of the optical axis of the shaped beams travel to the rear surface side of the workpiece, the light intensity of the beams irradiated to the member located on the rear surface side decreases, thereby suppressing damage to the member.

The beam shaper according to one or more embodiments can suppress the damage to the member located on the rear surface side, even if the beams in the vicinity of the optical axis of the shaped beams generated by the mode conversion device travel to the rear surface side of the workpiece.

### [BRIEF DESCRIPTION OF DRAWINGS]

[FIG. 1] FIG. 1 is a configuration diagram illustrating a beam shaper according to a first embodiment.
[FIG. 2] FIG. 2 is a diagram illustrating an overall configuration example of a laser processing machine having a beam shaper according to a first embodiment.
[FIG. 3] FIG. 3 is a partial configuration diagram including a configuration below a workpiece processed by the shaped beams emitted from the nozzle of the processing head of FIG. 2.
[FIG. 4] FIG. 4 is a configuration diagram illustrating a typical beam shaper for converting a beam mode of laser beams into a ring mode.
[FIG. 5] FIG. 5 is a diagram illustrating a state in which the collimated lens in FIG. 4 is omitted and the laser beams are incident on the axicon lens with parallel light having a divergence angle of 0 degree.
[FIG. 6] FIG. 6 is a characteristic diagram illustrating a spatial distribution of light intensity of the shaped beams irradiated onto a bottom plate of FIG. 3.
[FIG. 7A] FIG. 7A is a side view illustrating a mode conversion element used as a mode conversion device included in the beam shaper according to a first embodiment.
[FIG. 7B] FIG. 7B is a plan view illustrating a mode conversion element used as a mode conversion device included in the beam shaper according to a first embodiment.
[FIG. 8] FIG. 8 is a diagram illustrating a state in which the collimating lens in FIG. 1 is omitted and laser beams are incident on the mode conversion element by parallel light having a divergence angle of 0 degree.
[FIG. 9A] FIG. 9A is a diagram illustrating a state in which inner peripheral beams emitted from a position near the apex of an inclined plane are incident on the focusing lens across an optical axis and emitted from the focusing lens when an axicon lens having no flat surface is used as the emitting surface.
[FIG. 9B] FIG. 9B is a diagram illustrating a state in which the inner peripheral beams emitted from the innermost position of the inclined plane are incident on the focusing lens across an optical axis and emitted from the focusing lens when a mode conversion element having a flat surface is used.
[FIG. 9C] FIG. 9C is a diagram illustrating a state in which the inner peripheral beams are incident on the focusing lens across the optical axis and emitted from the focusing lens when the flat surface is larger than the flat surface shown in FIG. 9B.
[FIG. 9D] FIG. 9D is a diagram illustrating a state in which the inner peripheral beams are incident on the focusing lens across the optical axis and emitted from the focusing lens when the flat surface is larger than the flat surface shown in FIG. 9C.
[FIG. 10] FIG. 10 is a characteristic diagram illustrating the spatial distribution of the light intensity of the shaped beams irradiated onto the bottom plate shown in FIG. 1 when the mode conversion element shown in FIG. 1 is replaced with an axicon lens having no flat surface on the emitting surface.
[FIG. 11] FIG. 11 is a characteristic diagram illustrating the spatial distribution of the light intensity of the shaped beam irradiated onto the bottom plate shown in FIG. 1 when the diameter of the flat surface provided on the emitting surface of the mode conversion element is 3.0 mm.
[FIG. 12] FIG. 12 is a characteristic diagram illustrating the spatial distribution of the light intensity of the shaped beams irradiated onto the bottom plate shown in FIG. 1 when the diameter of the flat surface provided on the emitting surface of the mode conversion element is 2.0 mm.
[FIG. 13] FIG. 13 is a characteristic diagram illustrating the spatial distribution of the light intensity of the shaped beam irradiated onto the bottom plate shown in FIG. 1 when the diameter of the flat surface provided on the emitting surface of the mode conversion element is 2.5 mm.
[FIG. 14] FIG. 14 is a configuration diagram illustrating a beam shaper according to a second embodiment.
[FIG. 15] FIG. 15 is a configuration diagram illustrating a beam shaper according to a third embodiment.

### [DESCRIPTION OF EMBODIMENTS]

A beam shaper according to one or more embodiments includes a mode conversion device, a collimating lens, and a focusing lens. The mode conversion device refracts laser beams incident on the outer peripheral side of a central portion about an optical axis of incident laser beams of divergent light towards the optical axis and emits the laser beams incident on the central portion as outer peripheral side beams and emits the laser beams incident on the central portion as central beams having an angle of emergence equal to an angle of incidence. The collimating lens converts the outer peripheral side beams and the central beams emitted from the mode conversion device into collimated light. The focusing lens focuses the outer peripheral side beams and the central beams emitted from the collimating lens.

The inner peripheral beams located on the innermost peripheral side of the outer peripheral side beams intersect at a position closer to the mode conversion device side relative to the focal point of the inner peripheral beams and the outer peripheral beams located on the outermost peripheral side of the outer peripheral side beams. The size of the center portion is set such that the focusing lens emits the inner peripheral beams in a direction parallel to or away from the optical axis.

Hereinafter, the beam shaper according to first to third embodiments will be described with reference to the accompanying drawings. The same or equivalent parts or components throughout the drawings are assigned the same reference signs. The following embodiments illustrate a device and the like for embodying the technical concept of the present invention. The technical concept of the present invention does not specify the material, shape, structure, arrangement, function, and the like of each component as described below.

### <First Embodiment>

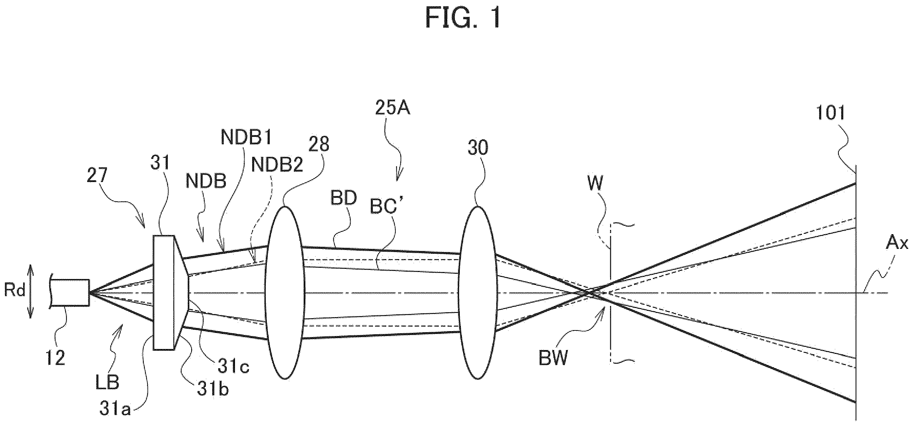

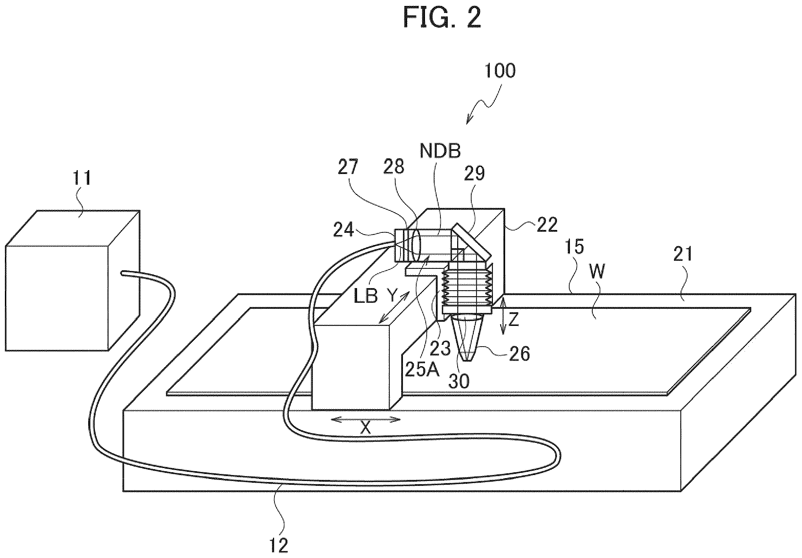

FIG. 1 is a configuration diagram showing a beam shaper 25A according to a first embodiment. FIG. 2 is a diagram showing an overall configuration example of a laser processing machine 100 including a beam shaper 25A. The beam shaper 25A shown in FIG. 1 is provided in the laser processing machine 100 shown in FIG. 2. The laser processing machine 100 is a laser cutting machine for cutting a sheet metal W as a workpiece. The laser processing machine 100 may be a laser welding machine for welding the sheet metal W, a surface modifying device for modifying the surface of the sheet metal W, or a marking device for marking the sheet metal W.

As shown in FIG. 2, the laser processing machine 100 includes a laser oscillator 11 for generating and emitting laser beams LB, a laser processing unit 15, and a process fiber 12 for transmitting the laser beams LB to the laser processing unit 15. The laser oscillator 11 is a fiber laser oscillator or a direct diode laser (DDL) oscillator, for example. The laser oscillator 11 only have to have a wavelength locking mechanism and is not limited to a fiber laser oscillator or a DDL oscillator. The process fiber 12 is fitted along X- and Y-axis cable ducts (not shown) arranged in the laser processing unit 15.

The laser processing unit 15 includes a processing table 21 on which a sheet metal W is placed, a gate type X-axis carriage 22 movable in an X-axis direction on the processing table 21, and a Y-axis carriage 23 movable in a Y-axis direction perpendicular to the X-axis on the X-axis carriage 22. Further, the laser processing unit 15 includes a processing head 24 fixed to the Y-axis carriage 23. The processing head 24 includes a beam shaper 25A and a nozzle 26. The beam shaper 25A is housed in the processing head 24, and the nozzle 26 is mounted on an end of the processing head 24.

As shown in FIG. 1 or FIG. 2, the beam shaper 25A includes a mode conversion device 27, a collimating lens 28, a bend mirror 29, and a focusing lens 30. In FIG. 1, the bend mirror 29 is not shown.

Laser beams LB of divergent light emitted from an end of the process fiber 12 are incident on the mode conversion device 27. The mode conversion device 27 shapes the incident laser beams LB and emits the shaped beams NDB. The detailed configuration of the mode conversion device 27 and how the mode conversion device 27 shapes the laser beams LB will be described in detail later. The laser processing machine 100 including the mode conversion device 27 is suitable for cutting a medium-thick or thick sheet metal W.

The collimating lens 28 converts the shaped beams NDB emitted from the mode conversion device 27 into collimated light. The bend mirror 29 reflects the shaped beams NDB converted into collimated light downward in a Z axis direction perpendicular to the X and Y axes. The focusing lens 30 focuses the shaped beams NDB reflected by the bend mirror 29. The focused shaped beams NDB are emitted from the nozzle 26 and irradiated onto the sheet metal W.

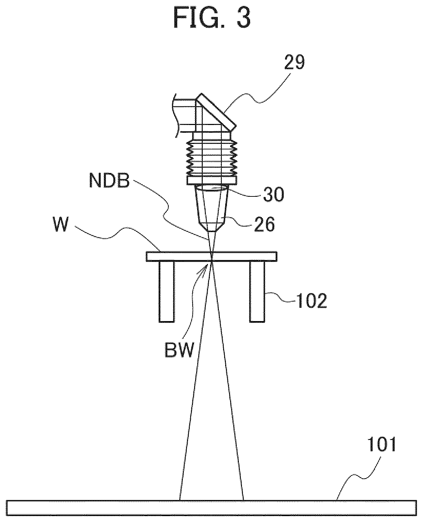

FIG. 3 is a partial configuration diagram including a configuration below the sheet metal W processed by the shaped beams NDB emitted from the nozzle 26 of the processing head 24 of FIG. 2. In FIG. 3, laser beams having a ring-shaped beam profile (thereafter referred to as ring-shaped beams) are formed at a beam waist BW of the shaped beams NDB focused by the focusing lens 30. A plurality of skids 102 are arranged above the bottom plate 101 of the laser processing machine 100, and a sheet metal W is placed on the skids 102. The plurality of skids 102 are arranged on the processing table 21 in FIG. 2. The sheet metal W is processed by the shaped beams NDB having a beam waist BW as ring-shaped beams. The focusing lens 30 positions the beam waist BW of the shaped beams NDB at a predetermined position in a thickness direction of the sheet metal W.

The laser processing machine 100 needs to change the depth of focus of the shaped beams NDB according to the material and the thickness of the sheet metal W. The depth of focus of the shaped beams NDB is the distance from the focal point of the focusing lens 30 in a traveling direction of the shaped beams NDB to a position at which the beam diameter of the shaped beams NDB extends to twice the root of the spot diameter of the shaped beams NDB. The spot diameter of the shaped beams NDB is the beam diameter at the beam waist BW of the shaped beams NDB. The spot diameter and the focal depth of the shaped beams NDB are determined by the wavelength of the shaped beams NDB and the focal length of the focusing lens 30.

The focusing lens 30 has a focal length suitable for the shaped beams NDB to have a focal depth corresponding to the material and thickness of the sheet metal W. The focusing lens 30 focuses the shaped beams NDB and positions the beam waist BW of the focused shaped beams NDB at a predetermined position suitable for processing by the ring-shaped beams in the thickness direction of the sheet metal W.

The mode conversion device 27, the collimating lens 28, the bend mirror 29, and the focusing lens 30 of the beam shaper 25A in FIG. 2 are fixed in the processing head 24 in a state in which the optical axis is adjusted in advance. In order to correct the focal position of the focusing lens 30, the collimating lens 28 may be movable in the X-axis direction.

The processing head 24 is fixed to the Y-axis carriage 23 movable in the Y-axis direction, and the Y-axis carriage 23 is provided on the X-axis carriage 22 movable in the X-axis direction. Therefore, the laser processing unit 15 can move the position at which the sheet metal W is irradiated with the laser beams LB emitted from the nozzle 26 in the X-axis direction and the Y-axis direction.

When the sheet metal W is processed by the shaping beams NDB, an assist gas for removing a molten material of the sheet metal W by the irradiation of the shaping beams NDB is injected from the nozzle 26 onto the sheet metal W. In FIG. 2, the structure of the processing head 24 for injecting the assist gas onto the sheet metal W is not shown.

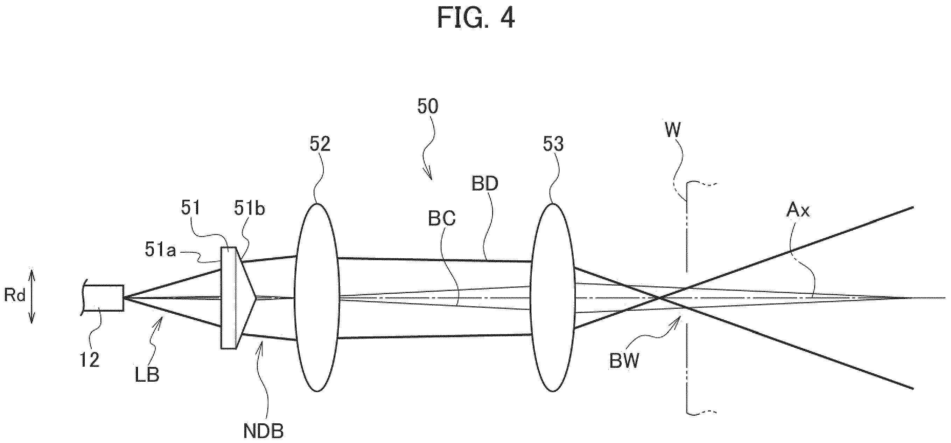

FIG. 4 is a configuration diagram showing a typical beam shaper 50 for converting a beam mode of the laser beams into a ring mode. The beam shaper 50 includes a plano-convex axicon lens 51, a collimating lens 52, and a focusing lens 53. The axicon lens 51 has a flat surface 51a at the incident surface of the laser beams LB and a conical inclined surface 51b having a vertex at the center of the emitting surface.

In FIG. 4, the beam located on the outermost peripheral side is shown as a thick solid line, and the beam located on the most central side adjacent to the apex of the inclined surface 51b is shown as a thin solid line when the laser beams LB are incident on the flat surface 51a and the shaped beams NDB are emitted from the inclined surface 51b. The beams located on the outermost peripheral side shown as a thick solid line are called outer peripheral beams BD, and the beams located on the innermost peripheral side shown as a thin solid line are called inner peripheral beams BC.

The inclined surface 51b of the axicon lens 51 is converted into shaped beams NDB by refracting the laser beams LB of divergent light towards the optical axis Ax shown as a one-dot chain line. The optical axis Ax corresponds to the axis passing through the center of the end of the process fiber 12 emitting the laser beams LB, the center of the axicon lens 51, the center of the collimating lens 52, and the center of the focusing lens 53, and is the central axis in the luminous flux of the laser beams traveling from the process fiber 12 toward the sheet metal W. The definition of the optical axis Ax is the same in other drawings such as FIG. 1.

In FIG. 4, the inner peripheral beams BC emitted from the lower position near the apex of the inclined plane 51b are refracted upward, and the inner peripheral beams BC emitted from the upper position near the apex of the inclined plane 51b are refracted downward. Accordingly, both inner peripheral beams BC travels across the optical axis Ax by intersecting on the optical axis Ax.

The collimating lens 52 converts the shaped beams DB into collimating light. As shown in FIG. 4, the outer peripheral beams BD above the optical axis Ax in FIG. 4 are parallel to the inner peripheral beams BC emitted from the upper position near the apex of the inclined plane 51b and travel below the optical axis Ax across the optical axis Ax. The outer peripheral beams BD below the optical axis Ax in FIG. 4 are parallel to the inner peripheral beams BC which are emitted from the lower position near the apex of the inclined plane 51b and travel above the optical axis Ax across the optical axis Ax. That is, the shaped beams NDB emitted at each position in the circumferential direction of the inclined plane 51b of the axicon lens 51 are converted into collimated light by the collimating lens 52. The focusing lens 53 focuses the shaped beams NDB converted into collimated light.

Ring-shaped beams are formed at the beam waist BW of the shaped beams NDB focused by the focusing lens 53. As shown in FIG. 4, the inner peripheral beams BC overlap at a position further away from the beam waist BW.

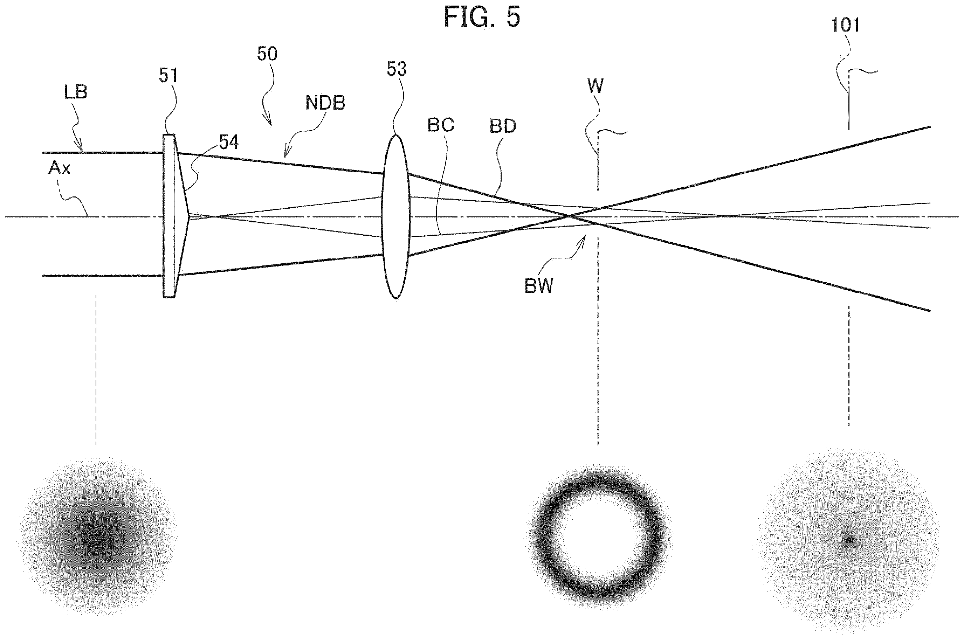

Referring to FIG. 5, a problem caused by overlapping of the inner peripheral beams BC at a position further away from the beam waist BW will be described. FIG. 5 shows a state in which the collimator lens 52 in FIG. 4 is omitted and the laser beams LB are incident on the axicon lens 51 with parallel light having a divergence angle of 0 degree. The laser beams LB of parallel light are incident on the axicon lens 51 in order to clarify the effect of the axicon lens 51 on the divergence angle or the convergence angle of the shaped beams NDB.

In FIG. 5, the beam profile is shown in two dimensions and the laser beams LB incident on the axicon lens 51 have a light intensity distribution in a Gaussian distribution. The sheet metal W is irradiated with ring-shaped beams having a ring-shaped light intensity distribution. The inner peripheral beams BC overlap at a position farther than the beam waist BW and travels across the optical axis Ax again. The inner peripheral beams BC may pass through the kerf of the cut sheet metal W and travel to the back side of the sheet metal W when the sheet metal W is cut by the ring-shaped beams of the shaped beams NDB. The inner peripheral beams BC may reach the bottom plate 101 below the skid 102 when the inner peripheral beams BC travel to the back side of the sheet metal W.

The beam profile at the position of the bottom plate 101 has a locally high light intensity in the region in which the inner peripheral beams BC overlap. The bottom plate 101 may be damaged when the bottom plate 101 is irradiated with laser beams having such a locally high light intensity. The bottom plate 101 is an example of an object located on the back side of the sheet metal W, and if an object other than the bottom plate 101 exists on the back side of the sheet metal W, the object may be damaged in the same manner.

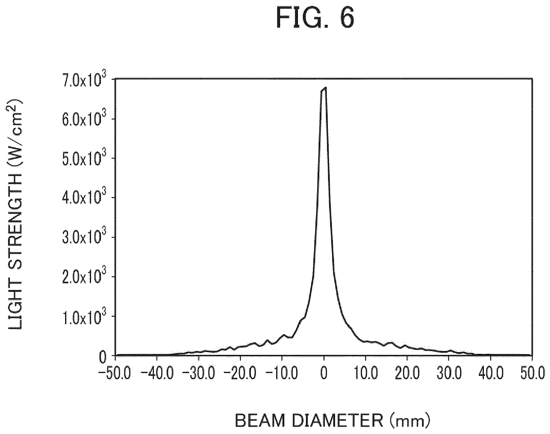

FIG. 6 shows a spatial distribution of the light intensity of the shaped beams NDB irradiated onto the bottom plate 101 of FIG. 3. The vertical axis of FIG. 6 is the light intensity (W/cm²) of the shaped beams NDB irradiated onto the bottom plate 101, and the horizontal axis is the beam diameter (mm). An object located on the back side of the sheet metal W may be damaged when the light intensity distribution of the shaped beams NDB irradiated onto the bottom plate 101 has a locally high light intensity in the region in which the inner peripheral beams BC overlap, as shown in FIG. 6.

As shown in FIG. 1, the beam shaper 25A according to a first embodiment includes a mode conversion element 31 of a plano-convex lens as a mode conversion device 27. The mode conversion element 31 has a flat surface 31a (first flat surface) which is the incident surface of the laser beams LB, an inclined surface 31b located at the outer peripheral end of the emitting surface, and a flat surface 31c located at the central portion of the emitting surface (second flat surface). The inclined surface 31b is a convex inclined surface. The mode conversion element 31 has a shape such that the top of the conical inclined surface 51b of the axicon lens 51 shown in FIG. 4 is cut at a plane parallel to the flat surface 51a.

In FIG. 1, the beams located on the outermost peripheral side are shown by a thick solid line, and the beams located on the innermost side of the inclined surface 31b is shown by a thin solid line when the laser beams LB are incident on the flat surface 31a and the shaped beams NDB are emitted from the inclined surface 31b. A dashed line shows the beams located on the outermost peripheral side when the laser beams LB are incident on the flat surface 31a and the shaped beams NDB are emitted from the flat surface 31c. The shaped beams NDB consist of outer peripheral side beams NDB1 located in a range enclosed by a thick solid line and a thin solid line formed by the passing of the shaped beams NDB through the inclined surface 31b, and central beams NDB2 located in a range enclosed by dashed lines formed by the passing of the shaped beams NDB through the flat surface 31c.

Thus, the mode conversion element 31 generates the outer peripheral side beams NDB1 and the central beams NDB2 based on the laser beams LB of the incident divergent light. The beams located on an outermost peripheral side shown by a thick solid line in the outer peripheral side beams NDB1 are called the outer peripheral beams BD, and the beams located on an innermost side shown as a thin solid line in the outer peripheral side beams NDB1 are called the inner peripheral beams BC'.

The flat surfaces 31a and 31c of the mode conversion element 31 are surfaces orthogonal to the optical axis Ax, and the surfaces extend in a beam radial direction Rd of the laser beams LB. The flat surfaces 31a and 31c are parallel to each other. The laser beams LB incident obliquely on the flat surface 31a are slightly refracted on the flat surface 31a. The laser beams LB incident on the inclined surface 31b are further refracted towards the optical axis Ax when they are emitted from the inclined surface 31b and emitted as the outer peripheral side beams NDB1. The laser beams LB incident on the flat surface 31c is refracted by the same angle in the direction opposite to the direction in which the laser beams LB are refracted when they are incident on the flat surface 31a. The refraction of the laser beams LB incident on the flat surface 31c are canceled when they are incident on and emitted from the mode conversion element 31. Therefore, the laser beams LB incident on the flat surface 31c are emitted as the center beams NDB2 while maintaining the angle of incidence on the flat surface 31a.

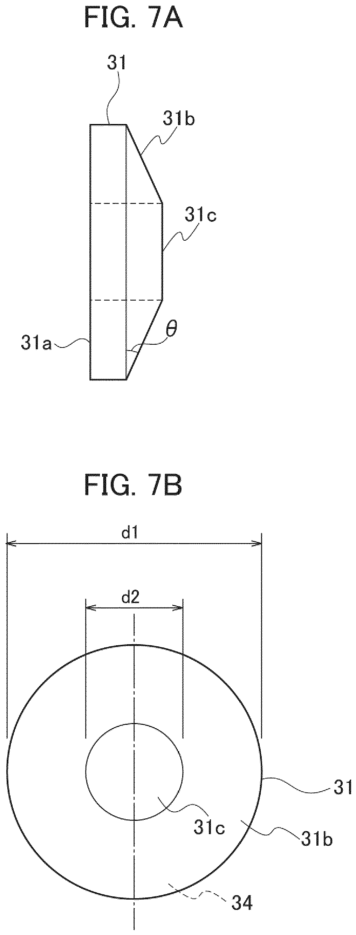

FIG. 7A is a side view of the mode conversion element 31 used as the mode conversion device 27 in FIG. 1, and FIG. 7B is a plan view of the mode conversion element 31 used as the mode conversion device 27 in FIG. 1. FIG. 7B shows the mode conversion element 31 viewed from the emitting side of the shaped beams NDB. The transmitted laser beams LB are converted into shaped beams NDB and emitted from the mode conversion element 31 when the laser beams LB pass through the mode conversion element 31 shown in FIGS. 7A and 7B.

A diameter d1 of the flat surface 31a and the inclined surface 31b, a diameter d2 of the flat surface 31c, and an inclination angle θ of the inclined surface 31b of the mode conversion element 31 shown in FIGS. 7A and 7B can be set to adequate values depending on the divergence angle of the laser beams LB and the arrangement of the mode conversion element 31. A boundary portion between the inclined surface 31b and the flat surface 31c may be a corner where the inclined surface 31b and the flat surface 31c collide with each angle, or may be a curved surface without a corner. The diameter d1, the diameter d2, and the inclination angle θ may be set to adequate values regardless of the shape of the boundary portion between the inclined surface 31b and the flat surface 31c.

Returning to FIG. 1, the collimating lens 28 converts the shaped beams NDB consisting of the outer peripheral side beams NDB1 and the central beams NDB2 into collimated light. As shown in FIG. 1, the beams constituting the outer peripheral side beams NDB1 located in a range enclosed by the outer peripheral beams BD and the inner peripheral beams BC' are parallel to each other, and the beams constituting the central beams NDB2 located in the range enclosed by the dashed line are parallel to each other. The focusing lens 30 focuses the shaped beams NDB converted into collimated light.

As shown in FIG. 1, the inner peripheral beams BC' intersect before the beam waist BW (on the mode conversion element 31 side), and the outer peripheral beams BD intersect before the beam waist BW and further away from the position at which the inner peripheral beams BC' intersect. The intersected inner peripheral beams BC' and the intersected outer peripheral beams BD expand from each intersected position.

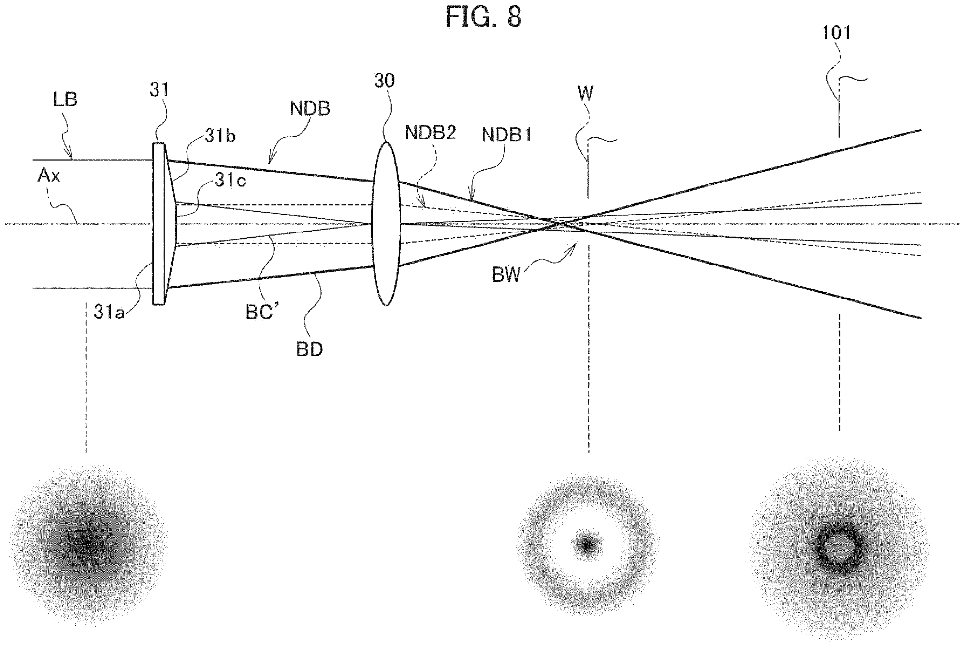

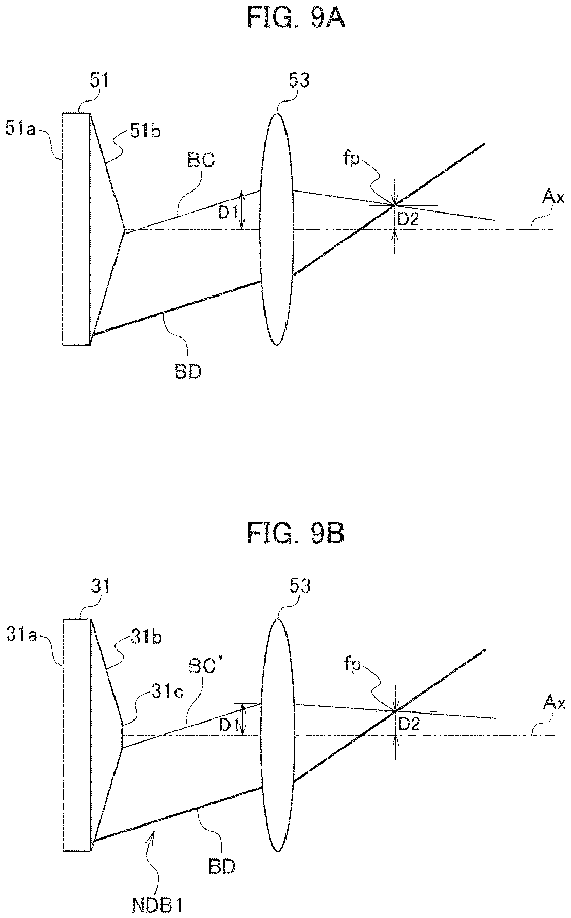

Referring to FIGS. 8 and 9A to 9D, an effect caused by the mode conversion element 31 having a flat surface 31c at the central portion of the emitting surface will be described. FIG. 8 shows a state in which the collimating lens 28 in FIG. 1 is omitted and the laser beams LB are incident on the mode conversion element 31 with parallel light having a divergence angle of 0 degree. The laser beams LB of parallel light are incident on the mode conversion element 31 in order to clarify the effect of the mode conversion element 31 on the divergence angle or the convergence angle of the shaped beams NDB.

Among the outer peripheral side beams NDB1, the beams which are incident on the focusing lens 30 across the optical axis Ax between the mode conversion element 31 and the focusing lens 30 are emitted from the focusing lens 30. The angle at which the beams travel with respect to the optical axis Ax is determined by the size of the flat surface 31c.

FIG. 9A shows, for comparison, a state in which the inner peripheral beams BC emitted from a position near the apex of the inclined surface 51b are incident on the focusing lens 53 across the optical axis Ax and emitted from the focusing lens 53 when the axicon lens 51 having no flat surface is used as the emitting surface. The inner peripheral beams BC emitted from the focusing lens 53 travel to approach the optical axis Ax, and then cross the optical axis Ax again. In FIG. 9A, a distance D1 in a direction orthogonal to the optical axis Ax from the optical axis Ax to the position at which the inner peripheral beams BC are incident on the focusing lens 53 and a distance D2 in a direction orthogonal to the optical axis Ax from the optical axis Ax to the focal point fp (beam waist BW) at which the inner peripheral beams BC and the outer peripheral beams BD converge have a relationship D1>D2.

In FIG. 9A, the inner peripheral beams BC and the outer peripheral beams BD emitted from the upper inclined surface 51b and focused by the focusing lens 53 are not shown. It can be seen that some beams on the side of the inner peripheral beams BC among the shaped beams NDB focused by the focusing lens 53 overlap since the inner peripheral beams BC emitted from the focusing lens 53 travel to approach the optical axis Ax and cross the optical axis Ax again.

FIG. 9B shows a state in which the inner peripheral beams BC' emitted from the innermost position of the inclined plane 31b are incident on the focusing lens 30 across the optical axis Ax and emitted from the focusing lens 30 when the mode conversion element 31 having a flat surface 31c is used. FIG. 9B shows a case in which the flat surface 31c is small. The inner peripheral beams BC' emitted from the focusing lens 30 travel to approach the optical axis Ax, and then cross the optical axis Ax again. The angle at which the inner peripheral beams BC' approach the optical axis Ax in FIG. 9B is smaller than the angle at which the inner peripheral beams BC approach the optical axis Ax in FIG. 9A.

In FIG. 9B, the distance D1 from the optical axis Ax to the position at which the inner peripheral beams BC' are incident on the focusing lens 30 and the distance D2 from the optical axis Ax to the focal point fp have a relationship D1>D2. The difference between the distance D1 and the distance D2 in FIG. 9B is smaller than the difference between the distance D1 and the distance D2 in FIG. 9A.

Also in FIG. 9B, some beams on the side of the inner peripheral beams BC' among the outer peripheral side beams NDB1 focused by the focusing lens 53 overlap since the inner peripheral beams BC' emitted from the focusing lens 53 travel to approach the optical axis Ax and cross the optical axis Ax again. However, the beams overlap further away in FIG. 9B since the angle at which the inner peripheral beams BC' approach the optical axis Ax in FIG. 9B is smaller than the angle at which the inner peripheral beams BC approach the optical axis Ax in FIG. 9A.

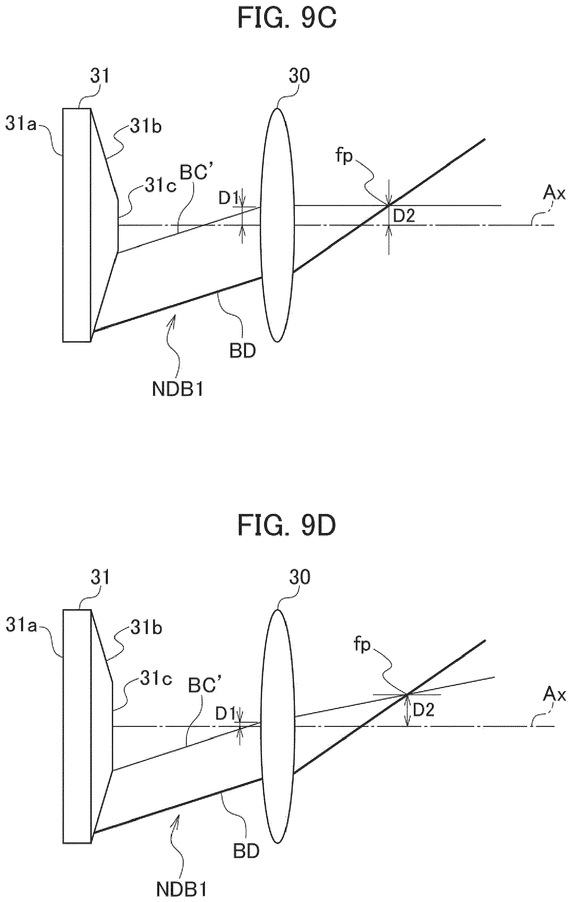

FIG. 9C shows a state in which the inner peripheral beams BC' are incident on the focusing lens 30 across the optical axis Ax and emitted from the focusing lens 30 when the flat surface 31c is larger than the flat surface 31c shown in FIG. 9B. The inner peripheral beams BC' emitted from the focusing lens 30 travel parallel to the optical axis Ax and does not cross the optical axis Ax again. In FIG. 9C, the distance D1 and the distance D2 have a relationship D1=D2. In FIG. 9C, the beams of the outer peripheral side beams NDB1 focused by the focusing lens 30 do not overlap after the focal point fp since the inner peripheral beams BC' emitted from the focusing lens 30 travel parallel to the optical axis Ax.

FIG. 9D shows a state in which the inner peripheral beams BC' are incident on the focusing lens 30 across the optical axis Ax and emitted from the focusing lens 30 when the flat surface 31c is larger than the flat surface 31c shown in FIG. 9C. The inner peripheral beams BC' emitted from the focusing lens 30 travel away from the optical axis Ax and do not cross the optical axis Ax again. In FIG. 9D, the distance D1 and the distance D2 have a relationship D1<D2. In FIG. 9D, the beams in the outer peripheral side beams NDB1 focused by the focusing lens 30 do not overlap after the focal point fp since the inner peripheral beams BC' emitted from the focusing lens 30 travel away from the optical axis Ax.

If the mode conversion element 31 is provided with a flat surface 31c, the position at which the outer peripheral side beams NDB1 begin to overlap after the beam waist BW is further away than the case in which the axicon lens 51 having no flat surface is used for the emitting surface. Therefore, the light intensity of the outer peripheral side beams NDB1 irradiated onto the bottom plate 101 decrease. Even if the center beams NDB2 overlap the outer peripheral side beams NDB1 after the beam waist BW, the bottom plate 101 is not irradiated with laser beams having a high light intensity as described in FIG. 5 since the center beams NDB2 overlap the outer peripheral side beams NDB1 with the decreased light intensity.

FIG. 8 shows a case in which the mode conversion element 31 having a large flat surface 31c is used as shown in FIG. 9D. In FIG. 8, the beam profile is shown in two dimensions, and the sheet metal W is irradiated with beams having a circular light intensity distribution by the central beams NDB2 in the center of the ring-shaped light intensity distribution. As shown in FIG. 8, the outer peripheral side beams NDB1 do not overlap after the beam waist BW. The outer peripheral side beams NDB1 and the central beams NDB2 partially overlap at the position of the bottom plate 101. Therefore, the bottom plate 101 is irradiated with ring-shaped beams having a ring-shaped light intensity distribution. However, the light intensity of the ring-shaped beams irradiated onto the bottom plate 101 is much lower than the locally high light intensity in FIG. 4. Therefore, the bottom plate 101 is hardly damaged by the irradiation of the ring-shaped beams.

As will be understood from the foregoing, the mode conversion element 31 includes a flat surface 31c in a central portion about the optical axis Ax. In this case, as shown in FIG. 9C, it is preferable to set the flat surface 31c such that the distance D1 and the distance D2 are set as equal distances, and the inner peripheral beams BC' in the outer peripheral side beams NDB1 can travel in parallel with the optical axis Ax. More preferably, as shown in FIG. 9D, the flat surface 31c may be set such that the distance D2 is longer than the distance D1, and the inner peripheral beams BC' can travel away from the optical axis Ax.

Here, the effect of the mode conversion device 27 on the laser beams LB (shaped beams NDB) is compared between the case in which the mode conversion element 31 shown in FIGS. 7A and 7B is used as the mode conversion device 27 and the case in which the axicon lens 51 shown in FIG. 4 is used as the mode conversion device 27. It is assumed that the mode conversion element 31 and the axicon lens 51 differ only in whether or not the emitting surface has a flat surface, and that the diameter d2 and the inclination angle θ are the same.

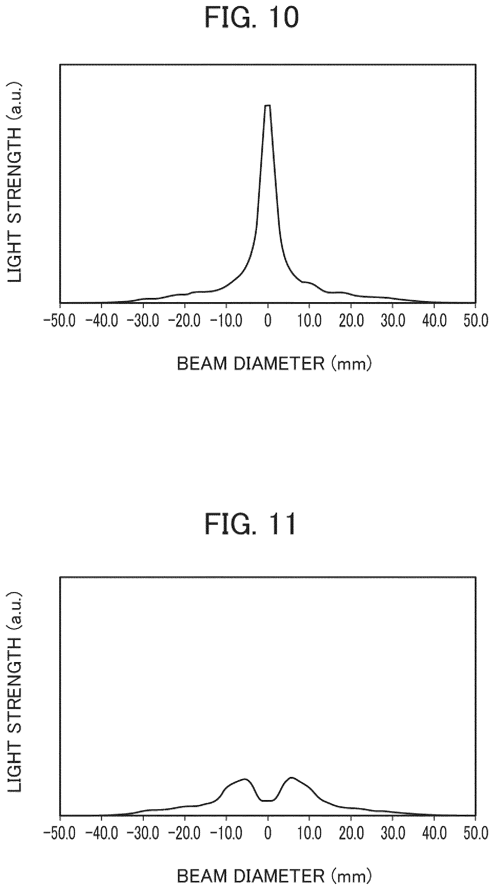

FIG. 10 shows the spatial distribution of the light intensity of the shaped beams NDB irradiated onto the bottom plate 101 of FIG. 1 when the mode conversion element 31 in FIG. 1 is replaced with the axicon lens 51. FIG. 11 shows the spatial distribution of the light intensity of the shaped beams NDB irradiated onto the bottom plate 101 of FIG. 1 when the mode conversion element 31 is used as the mode conversion device 27 as shown in FIG. 1. FIG. 11 shows the case in which the diameter d2 of the flat surface 31c of the mode conversion element 31 is 3.0 mm. In FIGS. 10 and 11, the vertical axis indicates the light intensity in arbitrary units (arbitrary unit; a.u.), and the horizontal axis indicates the beam diameter (mm) of the shaped beams NDB irradiated onto the bottom plate 101 in FIG. 1.

As can be seen by comparing FIGS. 10 and 11, the light intensity of the shaped beams NDB irradiated onto the bottom plate 101 in FIG. 1 is greatly reduced by using the mode conversion element 31 having a flat surface 31c.

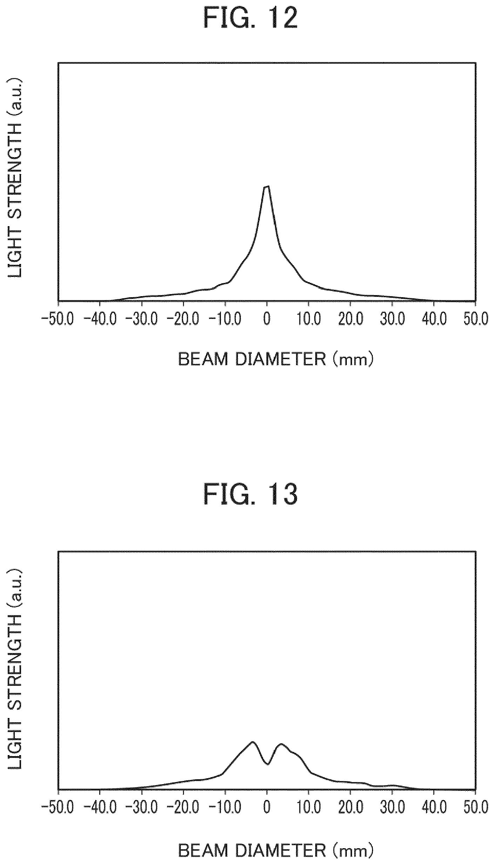

FIG. 12 shows the spatial distribution of the light intensity of the shaped beams NDB irradiated onto the bottom plate 101 in FIG. 1 when the diameter d2 of the flat surface 31c of the mode conversion element 31 is 2.0 mm. FIG. 13 shows the spatial distribution of the light intensity of the shaped beams NDB irradiated onto the bottom plate 101 of FIG. 1 when the diameter d2 of the flat surface 31c of the mode conversion element 31 is 2.5 mm. As can be seen by comparing FIG. 10 with FIG. 12 and comparing FIG. 10 with FIG. 13, the light intensity of the shaped beams NDB irradiated onto the bottom plate 101 of FIG. 1 is reduced by using the mode conversion element 31 having the flat surface 31c.

As can be seen by comparing FIGS. 11 to 13, the larger the diameter d2 of the flat surface 31c, the lower the light intensity. This is because, as the diameter d2 increases, the inner peripheral beams BC' do not travel toward the optical axis Ax, but travels away from the optical axis Ax.

The characteristic diagrams shown in FIGS. 11 to 13 show the spatial distribution of light intensity under a condition that the core diameter ϕ of the process fiber 12 is 100 mm and a beam parameter product (BPP) is 4 mm·mrad. The inclination angle θ of the inclined plane 31b of the mode conversion element 31 is 0.46°, the focal length f of the collimating lens 28 is 120 mm, the focal length f of the focusing lens 30 is 190 mm, and the distance between the end of the process fiber 12 and the mode conversion element 31 is 60 mm. The bottom plate 101 is positioned 900 mm below the focusing lens 30.

It is possible to suppress the damage of the bottom plate 101 due to the travel of the shaping beams NDB by setting the diameter d2 of the flat surface 31c according to the specifications of the laser oscillator 11, the process fiber 12, and the elements excluding the mode conversion element 31 of the beam shaper 25A as appropriate.

As described above, the beam shaper 25A according to a first embodiment can suppressed the damage of a member located on the rear surface side if the beams (center beams NDB2) near the optical axis Ax of the shaping beams NDB converted by the mode conversion device 27 travel to the rear surface side of the workpiece (sheet metal W).

### <Second embodiment>

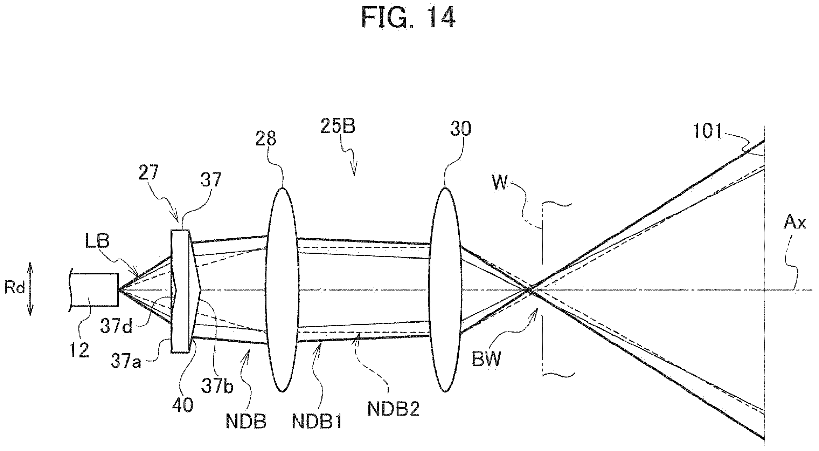

The beam shaper 25B according to a second embodiment will be described with reference to FIG. 14. FIG. 14 is a configuration diagram showing the beam shaper 25B according to a second embodiment. The beam shaper 25B is used instead of the beam shaper 25A in the laser processing machine 100 shown in FIG. 2. The beam shaper 25B includes a mode conversion element 37 as a mode conversion device 27.

The mode conversion element 37 has a flat surface 37a on the incident surface and a conical inclined surface 37b (second inclined surface) on the injection surface. The inclined surface 37b is a convex inclined surface. A concave inclined surface 37d (a first inclined surface) composed of a concave cone is formed in a central portion of the flat surface 37a. The inclination angle of the inclined surface 37b and the inclination angle of the inclined surface 37d are the same. Among the laser beams LB incident on the mode conversion element 37, the beams incident on the inclined surface 37 are refracted on the inclined surface 37d and refracted in an opposite direction on the inclined surface 37b, so that refraction is cancelled by incidence on and emission from the mode conversion element 37. Therefore, the inclined surface 37d and the region of the inclined surface 37b on which the beams passing through the inclined surface 37d are incident function similarly to the flat surface 31c of the mode conversion element 31.

Therefore, among the laser beams LB incident on the mode conversion element 37, the beams incident on the flat surface 37a on an outer periphery side of the inclined surface 37d are emitted as the outer peripheral side beams NDB1 from the mode conversion element 37. Among the laser beams LB incident on the mode conversion element 37, the beams incident on the inclined surface 37d are emitted as the center beam NDB2 from the mode conversion element 37. That is, the mode conversion element 37 included in the beam shaper 25B functions in the same manner as the mode conversion element 31 included in the beam shaper 25A.

The effect of the mode conversion element 37 on the laser beams LB (shaped beams NDB) in the beam shaper 25B is the same as the effect of the mode conversion element 31 on the laser beams LB (shaped beams NDB) in the beam shaper 25A.

Therefore, the beam shaper 25B according to a second embodiment can suppress the damage to the member located on the back side, even if the beams (center beams NDB2) near the optical axis of the shaped beams NDB converted by the mode conversion device 27 travel to the back side of the workpiece (sheet metal W).

### <Third embodiment>

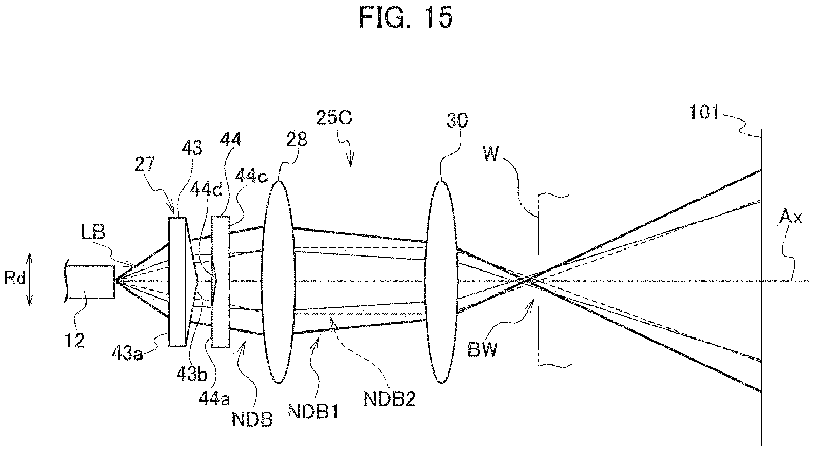

A beam shaper 25C according to a third embodiment will be described with reference to FIG. 15. FIG. 15 is a configuration diagram showing a beam shaper 25C according to a third embodiment. The beam shaper 25C is used instead of the beam shaper 25A in the laser processing machine 100 shown in FIG. 2. The beam shaper 25C includes a first optical element 43 and a second optical element 44 as a mode conversion device 27. The first optical element 43 and the second optical element 44 are arranged in a direction of the optical axis Ax.

The first optical element 43 includes a flat surface 43a (first flat surface) at an incident surface and a convex and conical inclined surface 43b (a first inclined surface) at an emitting surface. The second optical element 44 includes a flat surface 44a (a second flat surface) on the incident surface and a flat surface 44c (a third flat surface) on the emitting surface. A conical concave inclined surface 44d (a second inclined surface) is formed in a central portion of the flat surface 44a. The inclination angle of the inclined surface 43b and the inclination angle of the inclined surface 44d are the same. Among the laser beams LB incident on the first optical element 43, the beams incident on the inclined surface 44d through the inclined surface 43b are refracted on the inclined surface 43b and refracted in the opposite direction on the inclined surface 44d, so that the refraction is cancelled by emission from the first optical element 43 and incidence on the second optical element 44.

Therefore, the region of the inclined plane 43b that emits the beam incident on the inclined plane 44d and the inclined plane 44d function in the same manner as the flat plane 31c of the mode conversion element 31.

Therefore, among the laser beams LB incident on the first optical element 43 the beams which are not incident on the inclined plane 44d are refracted towards the optical axis Ax by the inclined plane 43b and are emitted as the outer peripheral side beams NDB1 from the second optical element 44. Among the laser beams LB incident on the first optical element 43, the beams which are incident on the inclined plane 44d are emitted as the center beams NDB2 from the second optical element 44. That is, the first optical element 43 and the second optical element 44 included in the beam shaper 25C function in the same manner as the mode conversion element 31 included in the beam shaper 25A.

The effect of the first optical element 43 and the second optical element 44 on the laser beams LB (shaped beams NDB) in the beam shaper 25C is the same as the effect of the mode conversion element 31 on the laser beams LB (shaped beams NDB) in the beam shaper 25A.

Therefore, the beam shaper 25C according to a third embodiment can suppress the damage of the member located on the backside, even if the beams (central beams NDB2) near the optical axis of the shaped beams NDB converted by the mode conversion device 27 travel to the backside of the workpiece (sheet metal W).

In FIG. 15, the position of the first optical element 43 may be replaced with the position of the second optical element 44. The first optical element 43 and the second optical element 44 may be arranged in either order in the direction of the optical axis Ax.

Although the beam shaper 25C according to a third embodiment requires two optical elements, the first optical element 43 and the second optical element 44 may be optical elements having a simpler structure than the mode conversion element 37 used in the beam shaper 25B according to a second embodiment.

As described above, the mode conversion device 27 may be any of the mode conversion element 31 shown in FIG. 1, the mode conversion element 37 shown in FIG. 14, the first optical element 43 shown in FIG. 15, and the second optical element 44 shown in FIG. 15, and the effect on the laser beams LB (shaped beams NDB) is the same regardless of the configuration. Among the laser beams LB of the incident divergent light, the mode conversion device 27 refracts the laser beams LB incident on the outer peripheral side of the central portion about the optical axis Ax towards the optical axis Ax and emits the laser beams LB as the outer peripheral side beams NDB1 which are the shaped beams. The mode conversion device 27 emits the laser beams LB incident on the central portion as the central beams NDB2 which are the shaped beams having an angle of emergence equal to an angle of incidence.

In the mode conversion element 31 shown in FIG. 1, the flat surface 31c is a central portion. In the mode conversion element 37 shown in FIG. 14, the central portion is formed by the concave inclined surface 37d and the region of the inclined surface 37b on which the beams passing through the inclined surface 37d are incident. In the first optical element 43 and the second optical element 44 shown in FIG. 15, the central portion is formed by the inclined surface 44d and the region of the inclined surface 43b from which the beams incident on the inclined surface 44d are emitted.

In the beam shaper 25A to 25C according to first to third embodiments described above, the positions of the mode conversion device 27 and the collimator lens 28 in the optical axis Ax direction may be replaced. When the mode conversion device 27 is arranged on the side of the process fiber 12 as in the beam shaper 25A to 25C according to first to third embodiments, the laser beams LB are converted into the shaped beams NDB by the mode conversion device 27 with a small beam diameter of the laser beams LB. By arranging the mode conversion device 27 on the side of the process fiber 12, the mode conversion element 31 or 37 used as the mode conversion device 27 or the first optical element 43 and the second optical element 44 can be downsized.

The beam shaper 25A to 25 C according to first to third embodiments further includes a collimating lens 28 arranged on the optical path of the shaped beams NDB between the mode conversion device 27 and the focusing lens 30, and the shaped beams NDB emitted from the collimating lens 28 are incident on the focusing lens 30. The collimating lens 28 may be omitted when the required specification of the ring-shaped beams necessary for processing the sheet metal W is satisfied and damage to the bottom plate 101 caused by irradiation of the shaped beams NDB can be suppressed.

This application claims priority based on Japanese Patent Application No. 2021-163512 filed with the Japan Patent Office on October 4, 2021; the entire contents of which are incorporated herein by reference.

## Claims

1. A beam shaper comprising:
a mode conversion device configured to refract, among laser beams of incident divergent light, laser beams incident on an outer peripheral side of a central portion about an optical axis towards the optical axis to emit as outer peripheral side beams, and to emit the laser beams incident on the central portion as central beams having an angle of emergence equal to an angle of incidence;
a collimating lens configured to convert the outer peripheral side beams and the central beams emitted from the mode conversion device into collimated light; and
a focusing lens configured to focus the outer peripheral side beams and the central beams emitted from the collimating lens, wherein
an inner peripheral beams located on an innermost peripheral side of the outer peripheral side beams intersect at a position closer to the mode conversion device side relative to the focal point of the inner peripheral beams and an outer peripheral beams located on the outermost peripheral side of the outer peripheral side beams; and
a size of the central portion is set such that the focusing lens emits the inner peripheral beams in a direction parallel to or away from the optical axis.

2. The beam shaper according to claim 1, wherein the mode conversion device comprises a first flat surface at an incident surface of the laser beams, a convex inclined surface at an emitting surface of the outer peripheral side beams, and a second flat surface parallel to the first flat surface on an emitting surface of the central beams.

3. The beam shaper according to claim 1, wherein the mode conversion device comprises a flat surface at an incident surface of the laser beams, a concave first inclined surface formed on the flat surface and composed of a concave cone about the optical axis, and a second inclined surface having an inclination angle equal to the inclination angle of the first inclined surface at an emitting surface of the outer peripheral side beams and the central beams.

4. The beam shaper according to claim 1, wherein
the mode conversion device comprises a first optical element and a second optical element arranged in a direction of the optical axis,
the first optical element comprises a first flat surface at an incident surface of the laser beams and a convex first inclined surface at an emitting surface of the laser beams,
the second optical element comprises a second flat surface at an incident surface of the laser beams, a concave second inclined surface formed in the second flat surface and composed of a concave cone about the optical axis, and a third flat surface at an emitting surface of the laser beams, and
the first optical element and the second optical element are arranged in either order in the direction of the optical axis.

5. The beam shaper according to claim 2, wherein the size of the central portion is set such that the focusing lens emits the inner peripheral beams in a direction parallel to or away from the optical axis.

6. The beam shaper according to any one of claims 1 to 4, wherein, when a distance in a direction orthogonal to the optical axis from the optical axis to the position at which the inner peripheral beams are incident on the focusing lens is denoted as D1, and a distance in a direction orthogonal to the optical axis from the optical axis to the focal point is denoted as D2, the size of the central portion is set such that the distance D1 and the distance D2 are equal, or the distance D2 is greater than the distance D1.

7. The beam shaper according to claim 5, wherein, when a distance in a direction orthogonal to the optical axis from the optical axis to the position at which the inner peripheral beams are incident on the focusing lens is denoted as D1, and a distance in a direction orthogonal to the optical axis from the optical axis to the focal point is denoted as D2, a size of the second flat surface is set such that the distance D1 and the distance D2 are equal, or the distance D2 is greater than the distance D1.
